# EUROPEAN PATENT APPLICATION

(11) **EP 3 076 562 A2**
(43) Date of publication of application: **05.10.2016**
(21) Application number: 16163107.2
(22) Date of filing: 31.03.2016
(51) Int. Cl.: H04B 5/00, H04B 5/02

(54) **ANTENNA APPARATUS AND WIRELESS COMMUNICATION SYSTEM**

(30) Priority: 02.04.2015 US 201562142129 P; 24.03.2016 US 201615080085
(71) Applicant: Mitsumi Electric Co., Ltd., Tama-shi, Tokyo 206-8567 (JP)
(72) Inventor: AYATOLLAHI, Mina, Tama-shi, Tokyo 206-8567 (JP); HUSSEIN, Ershad, Tama-shi, Tokyo 206-8567 (JP); WATANABE, Takeo, Tama-shi, Tokyo 206-8567 (JP)
(74) Representative: Grünecker Patent- und Rechtsanwälte PartG mbB

(57) **Abstract**

Disclosed is an antenna apparatus and a wireless communication system. According to one implementation, the antenna apparatus includes, a near field communication antenna and a cable that is connected to the near field communication antenna. The cable of the antenna apparatus is connected to a communication transceiver. The antenna apparatus further comprises a matching circuit that is connected to the cable and the communication transceiver circuit. The matching circuit matches impedances and tunes the resonance frequency of the near field communication antenna. The communication circuit exchanges signals.

## Description

### BACKGROUD OF THE INVENTION

### Field of the Invention

The present invention relates to an antenna apparatus and a wireless communication system.

### Description of the Related Art

With the rapid growth of wireless technology in vehicles and the emergence of connected cars, automotive industry is changing dramatically. Advanced connectivity, allows cars to communicate with each other and with road infrastructure automatically to improve safety and provide a better in-vehicle experience and comfort for drivers and passengers. Near Field Communication (NFC) is one of the key technologies for future in-vehicle connectivity for connected car.

Near Field Communication (NFC) is a short-range wireless connectivity technology that evolved from the existing contactless Radio frequency identification (RFID) technology. NFC provides intuitive, simple, and reliable communication between electronic devices and simplifies the way consumer devices interact with each other. Among its applications are performing contacts-less payment transactions, accessing digital content, connecting devices with a single touch or using access control systems. It can be used in any other applications that require sharing and receiving information.

NFC may operate at 13.56 MHZ and communication between two NFC-compatible devices occurs when they are brought in close proximity to one another with an effective range of several centimeters (typically up to about 4 cm, or up to about 10 cm, depending upon the given implementation). Other suitable versions of near field communication which may have different operating frequencies, effective ranges, etc. , may also be used. A simple wave or touch can establish an NFC connection. Because the transmission range is short, NFC-enabled transactions are inherently secure. Also, physical proximity of the device to the reader gives users the reassurance of being in control of the process. NFC technology can be used inside a vehicle to customize and enhance the driving experience for drivers and passengers. It allows the occupants to customize their preferences and personal setting such as exact seat position, favorite music or radio stations, satellite navigation history, interior lighting levels, climate control settings or others, by simply touching their NFC enabled electronic device to the car NFC module.

Bluetooth (registered trademark) technology has also become a popular feature in vehicles. Bluetooth is a wireless communication standard used for exchanging information using a radio wave with 2.4 [GHz] between information devices with a distance from a few meters to a few tens of meters. Many vehicles include capability for a driver or occupant to wirelessly connect a personal electronic device with the vehicle's embedded entertainment and communication systems via Bluetooth. One example is using a vehicle's microphone and speaker system to operate a driver's mobile phone in a hands-free fashion. Another example is playing music from a personal music player through a vehicle's stereo sound system.

While the Bluetooth standard supports secure and reliable wireless communication between electronic devices (either personal or in-car systems), many consumers feel that the process of establishing Blue tooth communications between two devices, known as pairing, is cumbersome and unintuitive. To establish a secure connection, sharing of encryption keys between devices is required. The pairing process usually involves some level of user interaction to confirm the identity of the user and/or the device and the process is typically lengthy.

The same type of problem exists in establishing Wireless Local Area Network (Wireless LAN, or Wi-Fi) connectivity between a device and a wireless router. It is therefore required to establish a secure Bluetooth or Wi-Fi connectivity, and at the same time eliminate the need for multi-step data-intensive pairing process and make this process much simpler for the device user. Near Field Communication (NFC) technology can be used to automatically share encryption key data and to simplify the Bluetooth pairing between two NFC enabled devices. Bluetooth pairing is based on a standard proposed by the NFC Forum. See "Bluetooth Secure Simple Pairing Using NFC", Application Document, NFC Forum, NFCForum-ADBTSSP_1_1, 2014-09-01; and "The NFC Forum Connection Handover Technical Specification" 1.3. Using NFC the Bluetooth address and other optional parameters related to a specific Bluetooth-enabled device is provided. This removes the need for the user to select the appropriate device from a (potentially long) list. The result is a more seamless wireless user experience.

The NFC system includes a coil antenna connected to an electronic circuit. During operation, the combination of two NFC enabled devices (Polling Device and Listening Device) behaves like a transformer. An alternating current passes through a primary coil (Polling Device antenna) and creates an electromagnetic field, which induces a current in the secondary coil (Listening Device antenna) . The Listening Device may use the electromagnetic field (or RF field) transmitted by the Polling Device to power itself or it may be self powered. The configuration and tuning of both antennas determines the coupling efficiency from one device to the other.

A known device based on such techniques is an in-vehicle device that establishes NFC with a mobile phone, exchanges information required for the establishment of Bluetooth communication, and establishes the Bluetooth communication with the mobile phone using the information from the mobile phone, for hands-free communication (refer to Japanese Patent Application Laid-Open No. 2014-179932). The in-vehicle device, which is stored in the dashboard, includes an NFC transceiver circuit and an NFC antenna element disposed on the dashboard.

For in vehicle applications, such as NFC enabled Bluetooth pairing of an electronic device with the car infotainment system, the occupant must touch or pass the device in the range of the vehicle's NFC coil antenna. To enable all the passengers to access the system, the coil antenna should be located in a suitable position inside the car, for example vehicle's center console (console box) or any other suitable location. The location might not be suitable or have enough space for location the NFC transceiver. The NFC transceiver might be located in an area of the car which is far from the accessible location for the occupants.

Specifically, the in-vehicle device according to Japanese Patent Application Laid-Open No. 2014-179932 includes an NFC antenna element, which is disposed on the dashboard and integrated with a NFC transceiver circuit. Thus, the occupant in one of the front seats (driver's seat or passenger's seat) can establish NFC with a mobile phone, but no one in the back seat(s) can establish the NFC. For example, the occupant in the back seat has to manually establish the Bluetooth pairing to output audio signals stored in a mobile phone, such as music data, through the in-vehicle device.

Therefore, a system and method is needed to provide an accessible NFC coil antenna for all occupants of the car, and at the same time provide means for connecting the NFC coil antenna to the NFC controller circuitry or NFC transceiver which might be located remote from the NFC coil antenna.

### SUMMARY OF THE INVENTION

The present invention was made on the aforementioned background, and an object of the present invention is to expand the range of providing an antenna for NFC.

In order to achieve at least one of the above-described objects, according to an aspect of the present invention, there is provided an antenna apparatus including:
a near field communication antenna; and
a cable connected to the near field communication antenna.

Preferably, in the antenna apparatus, the cable is connected to a communication circuit to exchange signals.

Preferably, the antenna apparatus further includes a matching circuit that is connected to the cable for impedance matching.

Preferably, in the antenna apparatus, the matching circuit tunes the resonance frequency of the near field communication antenna.

Preferably, the antenna apparatus further includes:
a tuning circuit that is connected to both the near field communication antenna and the cable and tunes the resonance frequency of the near field communication antenna to an operating frequency of a wireless communication scheme.

Preferably, in the antenna apparatus, the cable is a twin-lead cable.

Preferably, in the antenna apparatus, the cable is a twisted-pair cable.

Preferably, in the antenna apparatus, the cable is a flexible cable.

Preferably, in the antenna apparatus, the near field communication antenna is a coil antenna.

According to another aspect of the present invention, there is provided a wireless communication system, including:
a transceiver that is disposed in a vehicle;
a near field communication antenna;
a cable that electrically connects the transceiver and the near field communication antenna; and
a matching circuit that is connected to both the transceiver and the cable and matches the impedance of the transceiver to the impedance seen at the end of cable;,
wherein, the near field communication antenna is disposed in a position that establishes communication with portable communication devices carried by multiple occupants of the vehicle; and
the cable has a length connectable to both the near field communication antenna and the transceiver.

Preferably, in the wireless communication system, wherein the matching circuit tunes the resonance frequency of the near field communication antenna.

Preferably, in the wireless communication system, the transceiver is located in the front or rear section inside the vehicle.

Preferably, in the wireless communication system, the transceiver is disposed in a location that is at a distance of at least 0.5 meter from the near field communication antenna.

Preferably, the wireless communication system further includes:
a tuning circuit that is connected to both the near field communication antenna and the cable and tunes the resonance frequency of the near field communication antenna to an operating frequency of a wireless communication scheme.

Preferably, in the wireless communication system, the tuning circuit matches the impedance of the near field communication antenna to the impedance of the cable.

### BRIEF DESCRIPTION OF THE DRAWINGS

The present invention will be described through the detailed description below and the accompanying drawings. Such description and drawings should not be construed to limit the present invention.
Fig. 1 is a block diagram of a wireless communication system according to an embodiment of the present invention.
Fig. 2 is a perspective view of a wireless communication system in a vehicle.
Fig. 3 is a plan view of a first exemplary wireless communication system.
Fig. 4A is a plan view of a second coil antenna.
Fig. 4B is a plan view of a third coil antenna.
Fig. 4C is a plan view of a fourth coil antenna.
Fig. 4D is a plan view of a fifth coil antenna.
Fig. 5A illustrates a configuration of a second tuning circuit.
Fig. 5B illustrates a configuration of a third tuning circuit.
Fig. 5C illustrates a configuration of a fourth tuning circuit.
Fig. 5D illustrates a configuration of a fifth tuning circuit.
Fig. 6 illustrates a configuration of a matching circuit.
Fig. 7 is a plan view illustrating a second exemplary wireless communication system.
Fig. 8 is a plan view illustrating a third exemplary wireless communication system.
Fig. 9A is a top view of a flexible cable.
Fig. 9B is a side perspective view of the flexible cable.
Fig. 9C is a bottom view of the flexible cable.
Fig. 10A is a top view of a base film and a conductor.
Fig. 10B is a bottom view of the base film and the conductor.

### DESCRIPTION OF THE PREFERRED EMBODIMENTS

Embodiments and modifications of the present invention will now be described in detail with reference to the accompanying drawings. The invention, however, should not be limited to the drawings.

### (Embodiments)

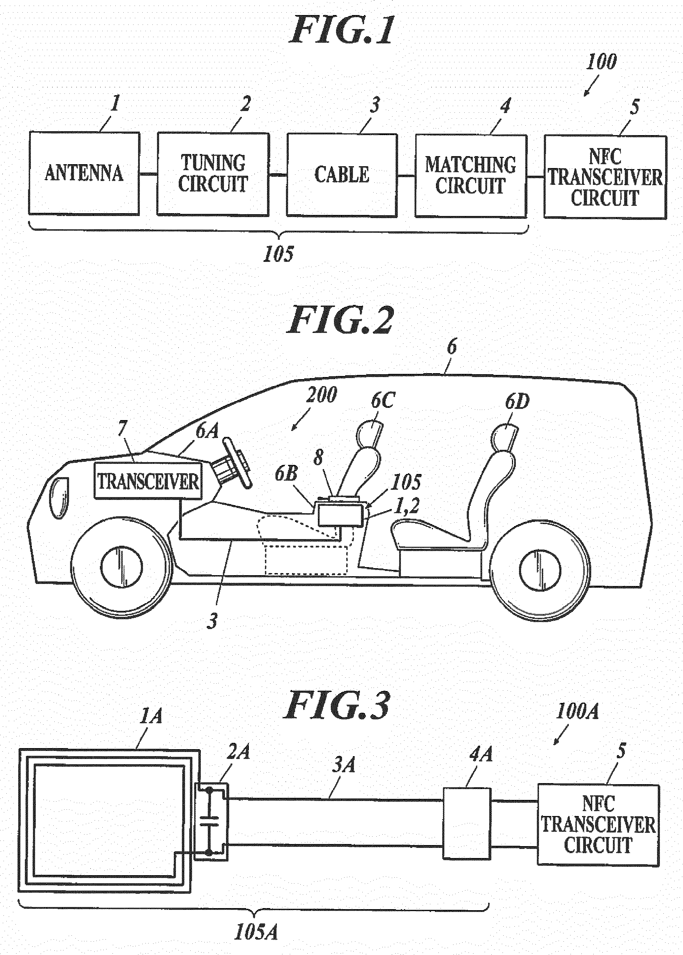

The embodiments of the present invention will now be described with reference to Figs. 1 to 6. Fig. 1 is a block diagram illustrating a wireless communication system 100 according to an embodiment. The wireless communication system 100 according to the embodiment is an NFC wireless communication system for an in-vehicle device (in-vehicle system) installed in a vehicle, such as an automobile.

With reference to Fig. 1, the wireless communication system 100 includes an antenna apparatus 105 and an NFC transceiver 5 as a communication circuit. The antenna apparatus 105 includes an antenna 1 for near field communication (NFC), a tuning circuit 2, a cable 3, and a matching circuit 4.

The antenna 1 is an NFC antenna, for example, a coil antenna element and establishes wireless communication with a coil antenna in an IC card or other devices by electromagnetic induction in an electromagnetic field. Here, the NFC antenna and NFC coil antenna can be used interchangeably. The operating frequency of the NFC is usually 13.56 MHz, but other frequencies can be used. The antenna 1 can also be used in the in-vehicle device. An NFC system including an NFC coil antenna can operate in reader/writer, card emulation, and peer to peer (P2P) modes. It can operate in any one of full power, battery low, and battery off conditions.

The tuning circuit 2 is connected to the antenna 1 and tunes resonance frequency of the antenna 1 to the operating frequency of the NFC. The cable 3 electrically connects the tuning circuit 2 and the matching circuit 4. The matching circuit 4 is a circuit connected to the cable 3, matches the impedance seen at the output of the cable 3 to the impedance of the NFC transceiver circuit 5. The matching circuit 4 may also tune the resonance frequency of the antenna 1. The tuning circuit 2 may match the impedance of the antenna 1 to the impedance of the cable 3 to the NFC transceiver circuit 5.

The NFC transceiver circuit 5 is a circuit of a later described transceiver 7 that sends NFC signals to the matching circuit 4 and receives signals from the matching circuit 4. The NFC transceiver circuit 5 typically includes a digital block consisting of a digital controller and a host interface. The analog front end of the NFC transceiver circuit 5 is connected to the matching circuit 4.

Fig. 2 is a perspective view of a wireless communication system 200 for a vehicle 6. With reference to Fig. 2, the wireless communication system 200 is installed in the vehicle 6. The wireless communication system 200 includes an antenna apparatus 105 and a transceiver 7 as a transceiver device. The transceiver 7 is an NFC polling device installed in the in-vehicle device and includes the NFC transceiver circuit 5.

The cable 3 connected to the matching circuit 4 in the transceiver 7 is routed from the dashboard 6A to a console box 6B in the vehicle 6 and connected to the antenna 1 disposed on the console box 6B. The transceiver 7 is disposed in a location that is at a distance of at least 0.5 meter from the antenna 1. The antenna 1 of the console box 6B is disposed between the front seats 6C, i.e., the driver and the passenger seats, so that any one of the occupants of the front seats 6C and the back seats 6D can readily operate the antenna 1.

The transceiver 7 can be used for NFC via the antenna apparatus 105 and Bluetooth communication. A mobile phone 8 serving as a listening device is a portable communication device carried by an occupant of the vehicle 6. The mobile phone 8 has functions of mobile telephone communication, NFC, and Bluetooth communication. The mobile phone 8 carried by an occupant can be replaced with any other portable communication device. Examples of such a device include mobile terminals and electronic devices (e.g., smart phones, tablet personal computers (PCs), palm-top PCs, and MP3 players) having wireless communication functions, such as NFC or Bluetooth communication.

In the above description, the transceiver 7 functions as a polling device, and the mobile phone 8 functions as a listening device. Alternatively, the transceiver 7 in the in-vehicle device may function as a listening device, and the mobile phone 8 which is a portable device may function as a polling device.

A non-volatile storage unit (not shown), such as a flash memory, installed in the transceiver 7 stores connection information for establishing the Bluetooth connection with the mobile phone 8, such as device addresses and pairing codes for authentication. A storage unit (not shown), such as a flash memory, installed in the mobile phone 8 stores connection information, such as identification information on the mobile phone 8, for establishing the Bluetooth connection with the transceiver 7.

The occupant carrying the mobile phone 8 brings the NFC coil antenna (not shown) installed in the mobile phone 8 to close proximity of the antenna 1 to establish the Bluetooth communication between the mobile phone 8 and the transceiver 7. This initiates the NFC via the antenna apparatus 105. The connection information stored in the storage unit of the transceiver 7 is read out and sent to the mobile phone 8, and the connection information stored in the storage unit of the mobile phone 8 is read out and sent to the transceiver 7. The transceiver 7 pairs with the mobile phone 8 using the received connection information, and the mobile phone 8 automatically pairs with the transceiver 7 using the received connection information. Such pairing establishes the Bluetooth communication. Once the Bluetooth communication has been established, music data, for example, stored in the storage unit of the mobile phone 8 can be sent to the transceiver 7 by the Bluetooth communication and the music data received by the transceiver 7 can be output as audio signals from an in-vehicle speaker in a stereo sound system of the in-vehicle device.

The NFC-based Bluetooth pairing may be applied to other in-vehicle communication schemes that require manual pairing, such as a Wi-Fi scheme.

The in-vehicle device of the vehicle 6 preferably includes an in-vehicle infotainment system and a telematics system. The in-vehicle device can operate in, for example, a navigation mode; a driver authentication and engine-start mode; an interior-device adjustment mode, which involves output of audio signals (stereo sound system), such as music and radio sounds, positioning of the front seats 6C, brightness control of the interior lights in the vehicle 6, and interior temperature control by an air conditioner; an NFC-based payment transaction mode; and a vehicle-diagnosis-data transmission mode.

In the driver authentication and engine-start mode, the driver brings the coil antenna of the mobile phone 8, which includes a storage unit storing the authentication data of the driver, to close proximity of the antenna 1 so as to transmit the authentication data to the transceiver 7 via the NFC, and the in-vehicle device starts the engine only when the driver is approved as a registered driver based on the authentication data.

In the interior-device adjustment mode, an occupant stores in the storage unit in the mobile phone 8 configuration information, which includes positioning information on the front seats 6C, the favorite music and radio stations of the occupant, the brightness of the interior lights, and the temperature control for the air conditioner, and brings the coil antenna of the mobile phone 8 to close proximity of the antenna 1 so as to transmit the configuration information to the transceiver 7 via the NFC, and the in-vehicle device controls various devices, such as a seat adjuster, a stereo sound system, interior lights, and an in-vehicle air conditioner, in accordance with the configuration information. In this mode, the parameters on the various devices in the vehicle 6 can be readily customized to meet the preference of the occupant, and the devices can be operated in accordance with these parameters.

In the NFC-based payment transaction mode, an occupant installs transaction applications for credit card services and debit card services on the mobile phone 8 and brings the coil antenna of the mobile phone 8 to close proximity of the antenna 1 so as to transmit payment information for various transactions to the transceiver 7 via the NFC, and the in-vehicle device performs various payment transactions through transmission of payment information to an external transaction server and reception of the results of the transaction.

In the vehicle-diagnosis-data transmission mode, an occupant brings the coil antenna of the mobile phone 8, which stores identification information on the occupant, to close proximity of the antenna 1 so as to transmit the identification information to the transceiver 7 via the NFC, and the in-vehicle device transmits data on the diagnosis of the vehicle based on the identification information and the measurements by the vehicle 6 to an external management server.

In the operation of a rented car, the Bluetooth pairing cannot be readily established between a mobile phone and the transceiver in the rented car. A rented car equipped with an antenna apparatus 105 and a wireless communication system 200, however, can readily establish Bluetooth pairing. Even if the vehicle the rental car company purchased is not equipped with the antenna apparatus 105 and the wireless communication system 200, the antenna apparatus 105 and the wireless communication system 200 can be installed in the vehicle after the purchase. Thus, the antenna apparatus 105 and the wireless communication system 200 can be provided in the form of aftermarket products.

With reference to Fig. 3, a wireless communication system 100A, which exemplifies the wireless communication system 100, will now be described. Fig. 3 is a plan view of the exemplary wireless communication system 100A.

With reference to Fig. 3, the wireless communication system 100A includes an antenna apparatus 105A and an NFC transceiver circuit 5. The wireless communication system 100A includes a coil antenna 1A exemplifying the antenna 1, a tuning circuit 2A exemplifying the tuning circuit 2, a twin-lead cable 3A exemplifying the cable 3, and a matching circuit 4A exemplifying the matching circuit 4.

The coil antenna 1A includes an antenna element composed of a metal wire shaped into a rectangular spiral of three loops. The outer loop of the coil antenna 1A, for example, is a 30×40 mm rectangle. The loops of wire are separated by 1 mm. The coil antenna 1A includes a flexible substrate or a rigid substrate on which the antenna element composed of wire is disposed. The coil antenna 1A may have any number of loops, any shape, any dimension, and any distance between the loops and may be composed of any material. Fig. 3 illustrates only the wire in the coil antenna 1A. The coil antenna 1A may be provided on a monolayer or multilayer circuit board.

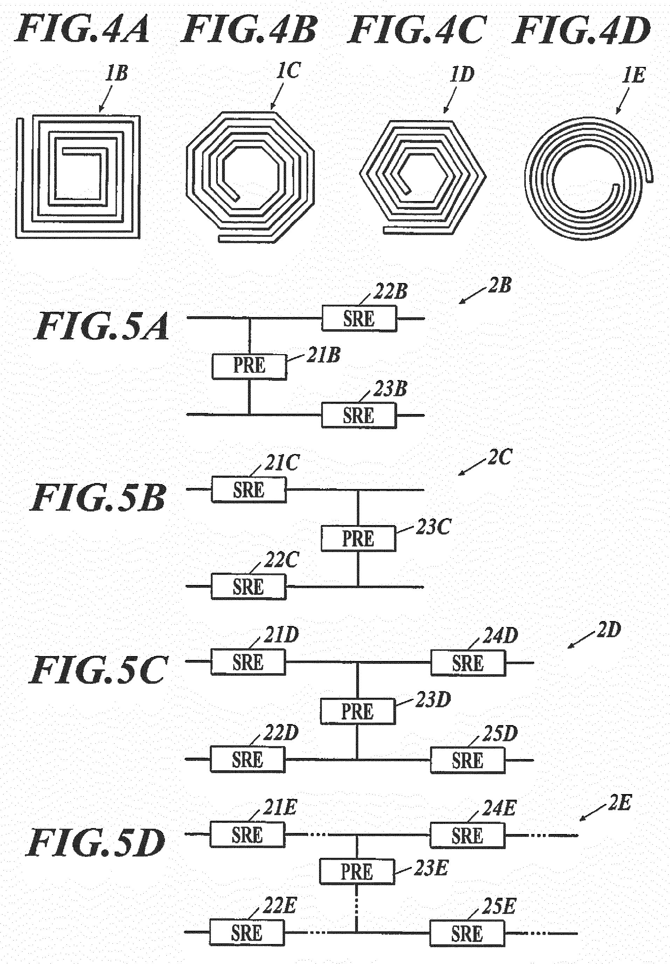

Figs. 4A to 4D respectively illustrate coil antennas 1B, 1C, 1D, and 1E, which exemplify the antenna 1. Fig. 4A is a plan view of the coil antenna 1B. Fig. 4B is a plan view of the coil antenna 1C. Fig. 4C is a plan view of the coil antenna 1D. Fig. 4D is a plan view of the coil antenna 1E.

The antenna 1 may be a coil antenna composed of wire, or an antenna composed of a flexible printed circuit (FPC), which consist of a thin, flexible substrate composed of an insulating material (e.g., polyimide) and a conductive metal pattern of copper foil, for example, disposed on the substrate. Alternative examples of the antenna 1 include the coil antenna 1B, which has a conductive pattern of a rectangular spiral such as that illustrated in Fig. 4A; the coil antenna 1C, which has a conductive pattern of an octagonal spiral such as that illustrated in Fig. 4B; the coil antenna 1D, which has a conductive pattern of a hexagonal spiral such as that illustrated in Fig. 4C; and the coil antenna 1E, which has a conductive pattern of a circular spiral such as that illustrated in Fig. 4D. Figs. 4A to 4D illustrate only the conductive patterns. The antenna 1 may include a conductive pattern of any shape, any number of loops, or any material.

With reference to Fig. 3, the tuning circuit 2A consists of a single capacitor connected in parallel with the two terminals of the coil antenna 1A. The tuning circuit 2A is an LC resonant circuit including a C component of the capacitor and an L component of the coil antenna 1A. The capacitance C of the capacitor of the tuning circuit 2A is designed to match the resonance frequency of the LC resonant circuit to the operating frequency of the NFC (13.56 MHz).

Figs. 5A to 5D respectively illustrate the tuning circuits 2B, 2C, 2D, and 2E, which exemplify the structure of the tuning circuit 2. Fig. 5A illustrates the tuning circuit 2B. Fig. 5B illustrates the tuning circuit 2C. Fig. 5C illustrates the tuning circuit 2D. Fig. 5D illustrates the tuning circuit 2E.

With reference to Figs. 5A to 5D, the terminal (s) on the left of drawing is connected to the coil antenna 1A, and the terminals on the right of the drawing are connected to the twin-lead cable 3A. A parallel reactive element (PRE) shown in Figs. 5A to 5D is a circuit element, such as a capacitor, an inductor (coil), or any other circuit element, disposed in parallel. A series reactive element (SRE) is a circuit element, such as a capacitor, an inductor (coil), or any other circuit element, disposed in series. With reference to Fig. 5A, the tuning circuit 2B includes PRE 21B and SREs 22B and 23B. The PRE 21B is connected in parallel with the two terminals of the coil antenna 1A. The SREs 22B and 23B are connected in series to both the two terminals of the PRE 21B and the two terminals of the twin-lead cable 3A.

With reference to Fig. 5B, the tuning circuit 2C includes SREs 21C and 22C and a PRE 23C. The SREs 21C and 22C are connected in series to the two terminals of the coil antenna 1A. The PRE 23C is connected in parallel to the terminals of the SREs 21C and 22C. The two terminals of the PRE 23C are connected to the two terminals of the twin-lead cable 3A.

With reference to Fig. 5C, the tuning circuit 2D includes SREs 21D, 22D, 24D, and 25D and a PRE 23D. The SREs 21D and 22D are connected in series to the two terminals of the coil antenna 1A. The PRE 23D is connected in parallel to the terminals of the SREs 21D, 22D. The SREs 24D and 25D are connected in series to both the two terminals of the PRE 23D and the two terminals of the twin-lead cable 3A.

With reference to Fig. 5D, the tuning circuit 2E includes pluralities of SREs 21E, 22E, 24E, and 25E and a plurality of PREs 23E. The SREs 21E and the SREs 22E are connected in series to the two terminals of the coil antenna 1A, and the PREs 23E, which are connected in series to each other, are connected in parallel to the terminals of the rightmost SREs of the SREs 21E and 22E. The SREs 24E and the SREs 25E are connected in series to both the terminals of the PREs 23E connected in series and the two terminals of the twin-lead cable 3A.

The tuning circuits 2A, 2B, 2C, 2D, and 2E exemplify the tuning circuit 2. The tuning circuit 2 may have any configuration that can match the resonance frequency of the antenna 1 to the operating frequency of the NFC (13.56 MHz).

The twin-lead cable 3A, which includes two leads having circular cross-sections disposed parallel to each other and covered with an insulating material, is connected to the two terminals of the tuning circuit 2A and has a relatively low loss. The twin-lead cable 3A, which has a low loss, can be relatively long. Thus, the twin-lead cable 3A can be made to be approximately three meters long to correspond to the distance between the transceiver 7 and the console box 6B. The impedance of the twin-lead cable 3A is 300 Ω, for example.

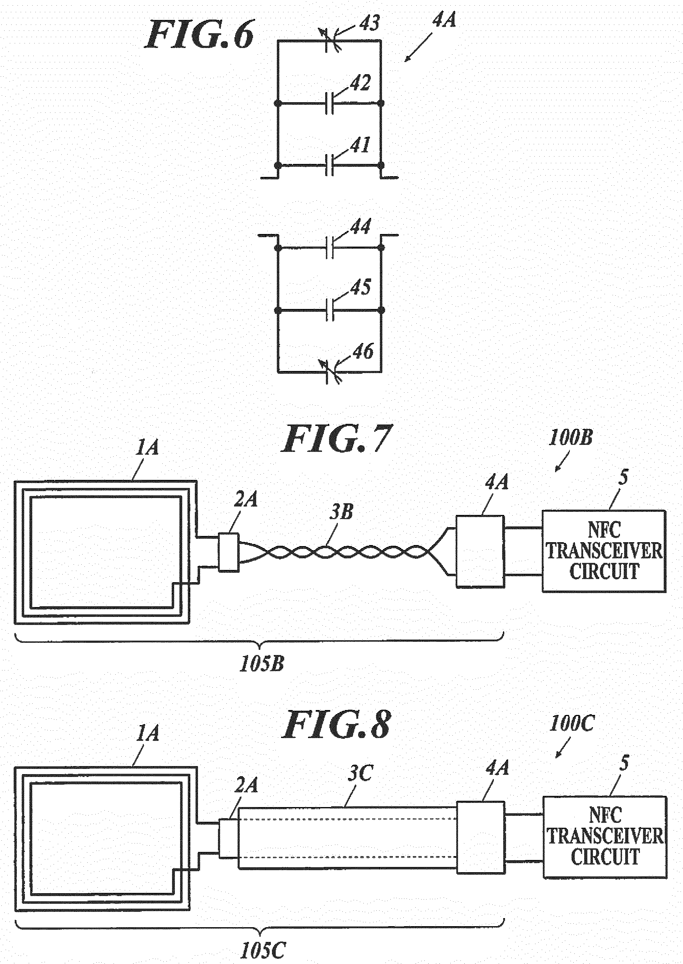

Fig. 6 illustrates the structure of the matching circuit 4A. With reference to Fig. 6, the matching circuit 4A includes capacitors 41 and 42 connected in parallel, a variable capacitor 43, capacitors 44 and 45 connected in parallel, and a variable capacitor 46. The capacitances of the variable capacitors 43 and 46 can be adjusted to match the impedance of the cable 3 of the coil antenna 1A and the impedance of the NFC transceiver circuit 5 and to tune the resonance frequency of the coil antenna 1A.

The matching circuit 4 may have the same configuration as that of any one of the tuning circuits 2B, 2C, 2D, and 2E illustrated in Figs. 5A to 5D, respectively. The matching circuit 4 may have any configuration that can match the impedance of the cable 3 of the coil antenna 1A and the impedance of the NFC transceiver circuit 5 and tune the resonance frequency of the coil antenna 1A.

According to this embodiment, the antenna apparatus 105 includes an antenna 1 and a cable 3.

Thus, the installation area of the NFC antenna 1 for the transceiver 7 is increased by the cable 3. For example, the antenna 1 can be disposed on the console box 6B. As a result, any one of the occupants of the front seats 6C and the back seats 6D can readily establish the NFC between the mobile phone 8 and the transceiver 7 to readily establish the Bluetooth communication and adjust the settings of various devices in the vehicle 6.

The antenna apparatus 105 is connected to the cable 3 and includes the matching circuit 4 which matches the impedances. The cable 3 is connected to the NFC transceiver circuit 5 through the matching circuit 4 to exchange signals. Therefore, the impedances can be matched with the matching circuit 4. The matching circuit 4 is able to match the resonance frequency of the antenna 1.

The antenna apparatus 105 includes a tuning circuit 2 that is connected to both the antenna 1 and the cable 3 and matches the resonance frequency of the antenna 1 to the operating frequency of the NFC. Thus, the resonance frequency of the antenna 1 can be readily matched to the operating frequency of the NFC.

The cable 3 is a twin-lead cable 3A. The twin-lead cable 3A, which has a relatively low loss, can be relatively long and thus can be readily routed from the transceiver 7 to the console box 6B.

The antenna apparatus 105A includes the coil antenna 1A exemplifying the antenna 1. Thus, the coil antenna 1A can establish wireless communication with any near mobile phone 8 via an electromagnetic field.

The wireless communication system 200 includes an antenna apparatus 105 and a transceiver 7, which is installed in the vehicle 6 and includes an NFC transceiver circuit 5. The antenna 1 is disposed in a position that establishes communication with the mobile phones 8 carried by multiple occupants in the vehicle. The cable 3 is sufficiently long to connect the antenna 1 and the transceiver 7. The matching circuit 4 matches the impedance of the transceiver 7 to the impedance seen at the end of the cable 3. The transceiver 7 is installed in the front or rear section inside the vehicle 6. The transceiver 7 is disposed in a location that is at a distance of at least 0.5 meter from the antenna 1. Thus, the antenna 1 can be readily disposed at any desired position in the vehicle 6, regardless of the position of the transceiver 7. The tuning circuit 2 is able to match the impedance of the antenna 1 to the impedance of the cable 3.

### (Modifications)

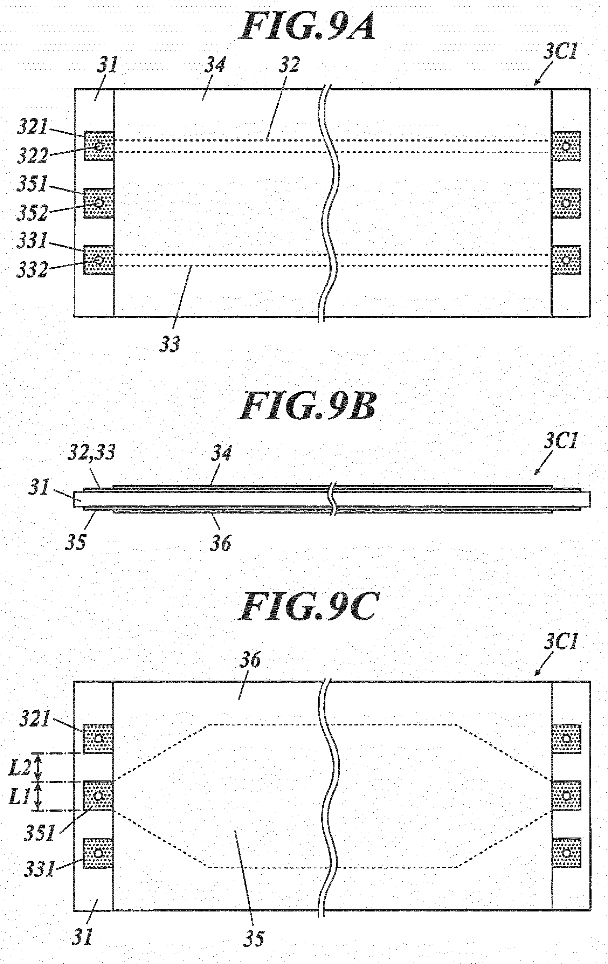

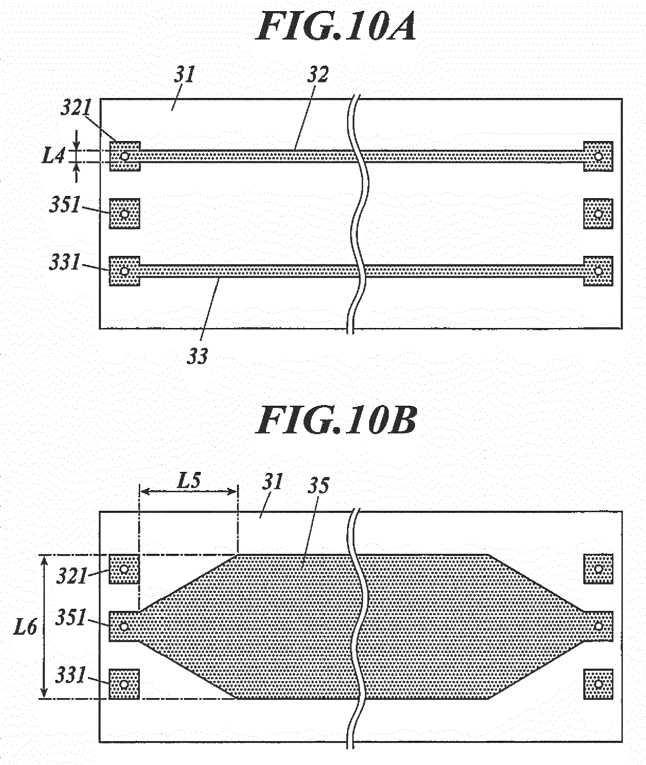

Modifications of the embodiments described above will now be described with reference to Figs. 7 to FIG. 10B. Specifically, wireless communication systems 100B and 100C will be described as modifications of the wireless communication system 100A. Fig. 7 is a plan view illustrating the wireless communication system 100B. Fig. 8 is a plan view illustrating the wireless communication system 100C. wireless communication system. Fig. 9A is a top view of a flexible cable 3C1. Fig. 9B is a side perspective view of the flexible cable 3C1. Fig. 9C is a bottom view of the flexible cable 3C1. Fig. 10A is a top view of a base film 31 and conductors 32 and 33. Fig. 10B is a bottom view of the base film 31 and the conductor 35.
Components that are the same as those in the embodiments described above are denoted by the same reference symbols.

With reference to Fig. 7, the wireless communication system 100B includes an antenna apparatus 105B and an NFC transceiver circuit 5. The antenna apparatus 105B includes a coil antenna 1A, a tuning circuit 2A, a twisted pair cable 3B, which exemplifies the cable 3, and a matching circuit 4A.

The twisted pair cable 3B, which includes a pair of leads twisted together, is connected to the two terminals of the tuning circuit 2A.

With reference to Fig. 8, the wireless communication system 100C includes an antenna apparatus 105C and an NFC transceiver circuit 5. The antenna apparatus 105C includes a coil antenna 1A, a tuning circuit 2A, a flexible cable 3C which exemplifies the cable 3, and a matching circuit 4A.

The flexible cable 3C is, for example, a cable formed by positioning two parallel conducting patterns with metal such as a copper foil on a substrate formed from a thin insulating material with high curvature such as polyimide and covering the conducting pattern with insulating material. The flexible cable 3C is preferred as the cable 3 because of the increased productivity.

Here, a flexible cable 3C1 which is a specific example of the flexible cable 3C is described with reference to FIG. 9A to FIG. 10B. As shown in FIG. 9A to FIG. 9C, the flexible cable 3C1 includes a base film 31; conductors 32 and 33; a cover 34; a conductor 35; and a cover 36.

The base film 31 is a film which is a dielectric body and a flexible band-shaped insulating body made from, for example, polyimide. The conductors 32 and 33 are conductors as metal patterns such as copper formed parallel to a longitudinal direction of the base film 31, and function as a signal line. As shown in FIG. 10A, the conductors 32 and 33 are formed on an upper surface of the base film 31. The cover 34 is an insulating body such as polyimide, and covers the base film 31 and the conductors 32 and 33 from above.

The conductor 35 is a conductor as a metal pattern such as copper formed parallel to a longitudinal direction of the base film 31, and functions as a ground line. As shown in FIG. 10B, the conductor 35 is formed on the lower surface of the base film 31. The cover 36 is an insulating body such as polyimide, and covers the base film 31 and the conductors 32 and 33 from below.

The conductors 32, 33, and 35 each have terminals 321, 331, 351 at both edges in the longitudinal direction. The terminals 321 and 331 are formed on the upper surface and the lower surface of the base film 31, are exposed from the covers 34 and 36, and have holes 322, 332 as through holes. The terminals 321 and 331 of the upper surface and the lower surface are connected through the holes 322 and 332 by through hole connection. The terminals 351 are formed on the upper surface and the lower surface of the base film 31, are exposed from the cover 36, and have holes 352 as through holes. The terminals 351 of the upper surface and the lower surface are connected through the holes 352 by through hole connection. The conductor 35 includes a tapered shaped portion in contact with the terminals 351 at both edges and extends in the longitudinal direction spreading to a predetermined width from the width of the terminals 351.

The conductors 32, 33, and 35 on the tuning circuit 2A side are electrically connected to the terminal of the tuning circuit 2A. Specifically, the conductors 32 and 33 on the tuning circuit 2A side are connected to two signal line pattern terminals of the tuning circuit 2A by soldering, and a fillet is formed between the outline surface of the holes 322 and 332 and the signal line pattern terminal surface of the tuning circuit 2A. Similarly, the conductor 35 on the tuning circuit 2A side is connected to one ground line pattern terminal of the tuning circuit unit 2A by soldering, and a fillet is formed between an outline surface of the hole 352 and the ground line pattern terminal surface of the tuning circuit 2A.

The conductors 32, 33, and 35 on the matching circuit 4A side are electrically connected to the terminal of the matching circuit 4A. Specifically, the conductors 32 and 33 on the matching circuit 4A side are connected to two signal line pattern terminals of the matching circuit 4A by soldering, and a fillet is formed between the outline surface of the holes 322 and 332 and the signal line pattern terminal surface of the matching circuit 4A. Similarly, the conductor 35 on the matching circuit 4A side is connected to one ground line pattern terminal of the matching circuit 4A by soldering, and a fillet is formed between an outline surface of the hole 352 and the ground line pattern terminal surface of the matching circuit 4A.

As shown in FIG. 9C, a length L1 from the terminals 321 and 331 to the terminals 351 is set to, for example, 1.5 [mm]. A length L2 of one side of the terminals 321, 331, and 351 in the longitudinal direction or the short direction of the plane of the flexible cable 3C1 is set to, for example, 1.5 [mm]. A length L3 of an exposed portion of the base film 31 on the upper surface or the lower surface in the longitudinal direction of the flexible cable 3C1 is set to, for example, 2 [mm]. As shown in FIG. 10A, a length L4 of a width of the conductors 32 and 33 in the short direction of the plane of the flexible cable 3C1 is set to, for example, 2 [mm]. As shown in FIG. 10B, a length L5 of the tapered portion of the conductor 35 in the longitudinal direction of the plane of the flexible cable 3C1 is set to, for example, 5 [mm]. A length L6 of a width of the conductor 35 in the short direction of the plane of the flexible cable 3C1 is set to, for example, 7.5 [mm].

In the flexible cable 3C1, by soldering the pattern terminals of the tuning circuit 2A and the matching circuit 4A in the holes 322 and 332, the strength of the soldering can be enhanced. Therefore, the tensile strength of the flexible cable 3C1 from the tuning circuit 2A and the matching circuit 4A can be enhanced. Further, the flexible cable 3C1 includes the conductor 35 which is one ground line in addition to conductors 32 and 33 which are two signal lines. Therefore, the strength of the flexible cable 3C1 is enhanced, and the tensile strength of the flexible cable 3C1 from the tuning circuit 2A and the matching circuit 4A can be further enhanced. Further, due to the conductor 35 as the ground line, influence such as noise from the vehicle 6 main body to the conductors 32 and 33 of the signal line can be reduced, and the stability of the signal flowing in the conductors 2 and 33 can be enhanced.

The cable 3 should not be limited to a twin-lead cable 3A, a twisted pair cable 3B, or a flexible cables 3C and 3C1. Other examples of the cable 3 include a FFC (Flexible Flat Cable) as a flexible cable in which two conducting wires with flat rectangular cross sections are positioned parallel covered with a flat insulator; a coaxial cable; or any other cable.

According to these modifications, the antenna apparatus 105B includes the twisted pair cable 3B exemplifying the cable 3. The antenna apparatus 105C includes the flexible cable 3C exemplifying the cable 3. The twisted pair cable 3B and the flexible cable 3C increase the installation area of the NFC coil antenna 1A for the transceiver 7, which functions as a polling device. Thus, for example, the coil antenna 1A can be disposed on the console box 6B.

Detailed descriptions of the invention conceived by the inventors have been described based on the embodiments and the modifications. The present invention, however, should not be limited to the embodiments and the modifications and may be modified within the scope of the invention.

According to the embodiments and the modifications described above, the antenna apparatuses 105, 105A, 105B, and 105C establish wireless communication in which NFC with an operating frequency of 13.56 MHz is employed. Alternatively, any communication scheme and operating frequency may be used. The antenna apparatuses 105, 105A, 105B, and 105C may use a wireless communication scheme based on another operating frequency and/or another standard, such as RFID. The antenna 1 may be any type of antenna that can couple two devices so as to exchange electromagnetic energy.

The wireless communication system according to the embodiments and the modifications is based on a Bluetooth communication scheme as an example. Alternatively, the wireless communication system may be based on any communication scheme. The present invention can be applied to a wireless communication system based on other wireless communication schemes, such as a Wi-Fi scheme, particularly a point-to-point wireless communication scheme.

According to the embodiments and the modifications, the transceiver 7 including the matching circuit 4 and the NFC transceiver circuit 5 is disposed in the dashboard 6A. Alternatively, the transceiver 7 may be disposed in any position. For example, the transceiver 7 may be disposed at any position, such as in the console box 6B or the trunk.

According to the embodiments and the modifications, the antenna 1 is disposed on the console box 6B. The position of the antenna 1 is not limited thereto. The antenna 1 may be disposed at any position. For example, the antenna 1 may be disposed at any position where an occupant of any of the back seats 6D can establish the NFC, such as on the back of one of the front seats 6C. Alternatively, the antenna 1 may be disposed anywhere that establishes the NFC from the exterior of the vehicle 6, such as on any of the doors, the front windshield, any of the side windows, or the rear window.

With the antenna 1 disposed at a position that can establish the NFC from the exterior of the vehicle 6, the in-vehicle device, for example, has a key lock/unlock function, a car sharing function, and a fleet managing function. A user brings the coil antenna of the mobile phone 8 storing identification information on the user to close proximity of the antenna 1 so as to transmit the identification information to the transceiver 7 via the NFC, and the in-vehicle device uses the identification information to lock or unlock the door keys, to identify a user of car sharing and unlock the door keys if the user is authenticated, and to manage the travel history and driving behavior of the user.

According to the embodiments and the modifications, the antenna apparatuses 105, 105A, 105B, and 105C include the corresponding tuning circuits 2, 2A, 2B, 2C, 2D and 2E. The configuration of the antenna apparatuses 100, 100A, 100B, and 100C is not limited thereto. The antenna apparatuses 105, 105A, 105B, and 105C may not include any one of the tuning circuits 2, 2A, 2B, 2C, 2D and 2E. With such a configuration, the matching circuit 4 matches the resonance frequency of the antenna 1 to the operating frequency of the wireless communication scheme.

According to the embodiments and the modifications, the antenna apparatuses 105, 105A, 105B, and 105C are in-vehicle antenna apparatuses, but may be any other antenna apparatus. The antenna apparatuses 105, 105A, 105B, and 105C may be disposed in any position other than a vehicle. For example, in an in-store system for transmitting information on products via the Bluetooth communication, the antenna 1 for the NFC may be disposed away from the receiver in a location readily accessible by customers so as to transmit pairing information for the Bluetooth communication via the NFC to the portable communication devices carried by the customers.

According to the embodiments and the modifications, the antenna apparatuses 105, 105A, 105B, and 105C and the wireless communication system including the above are provided with one antenna 1, one tuning circuit 2, one cable 3, and one matching circuit. However, the configuration of the antenna apparatuses 100, 100A, 100B, and 100C and the wireless communication system including the above is not limited to the above configuration. For example, the antenna apparatuses and the wireless communication system can include a configuration connecting pluralities of antennas 1, pluralities of tuning circuits 2, pluralities of cables 3, and pluralities of matching circuits so as to be able to for example, use pluralities of NFC antennas in parallel at the same time.

The embodiments described above of the present invention should be construed for mere illustrative purposes, not for limitation. The present invention is not limitedly applied to the above-described embodiments, and appropriate modifications or alterations of the invention can be made within the scope without departing from the spirit of the invention.

## Claims

1. An antenna apparatus comprising:
a near field communication antenna; and
a cable connected to the near field communication antenna.

2. The antenna apparatus according to Claim 1, wherein the cable is connected to a communication circuit to exchange signals.

3. The antenna apparatus according to Claim 1 or 2, further comprising a matching circuit that is connected to the cable for impedance matching.

4. The antenna apparatus according to Claim 3, wherein the matching circuit tunes the resonance frequency of the near field communication antenna.

5. The antenna apparatus according to any one of Claims 1 to 4, further comprising:
a tuning circuit that is connected to both the near field communication antenna and the cable and tunes the resonance frequency of the near field communication antenna to an operating frequency of a wireless communication scheme.

6. The antenna apparatus according to any one of Claims 1 to 5, wherein the cable is a twin-lead cable.

7. The antenna apparatus according to any one of Claims 1 to 5, wherein the cable is a twisted-pair cable.

8. The antenna apparatus according to any one of Claims 1 to 5, wherein the cable is a flexible cable.

9. The antenna apparatus according to any one of Claims 1 to 8, wherein the near field communication antenna is a coil antenna.

10. A wireless communication system, comprising:
a transceiver that is disposed in a vehicle;
a near field communication antenna;
a cable that electrically connects the transceiver and the near field communication antenna; and
a matching circuit that is connected to both the transceiver and the cable and matches the impedance of the transceiver to the impedance seen at the end of cable;
wherein, the near field communication antenna is disposed in a position that establishes communication with portable communication devices carried by multiple occupants of the vehicle; and
the cable has a length connectable to both the near field communication antenna and the transceiver.

11. The wireless communication system according to Claim 10, wherein the matching circuit tunes the resonance frequency of the near field communication antenna.

12. The wireless communication system according to Claim 10 or 11, wherein the transceiver is located in the front or rear section inside the vehicle.

13. The wireless communication system according to any one of Claims 10 to 12, wherein the transceiver is disposed in a location that is at a distance of at least 0.5 meter from the near field communication antenna.

14. The wireless communication system according to any one of Claims 10 to 13, further comprising:
a tuning circuit that is connected to both the near field communication antenna and the cable and tunes the resonance frequency of the near field communication antenna to an operating frequency of a wireless communication scheme.

15. The wireless communication system according to Claim 14, wherein the tuning circuit matches the impedance of the near field communication antenna to the impedance of the cable.
